# EUROPEAN PATENT APPLICATION

(11) **EP 3 816 885 A1**
(43) Date of publication of application: **05.05.2021**
(21) Application number: 19380026.5
(22) Date of filing: 28.10.2019
(51) Int. Cl.: G06Q 10/04, G06Q 50/06

(54) **METHOD FOR COMPUTER-IMPLEMENTED FORECASTING OF WIND PHENOMENA WITH IMPACT ON A WIND TURBINE**

(71) Applicant: SIEMENS GAMESA RENEWABLE ENERGY INNOVATION & TECHNOLOGY, S.L., 31621 Sarriguren (Navarra) (ES)
(72) Inventor: Gollnick, Bert, 22145 Hamburg (DE); Prosper Fernandez, Miguel Angel, 28043 Madrid (ES)
(74) Representative: Aspacher, Karl-Georg

(57) **Abstract**

The invention refers to a method for computer-implemented forecasting of wind phenomena with impact on one or more wind turbines of a wind farm. At each time step of one or more time steps during the operation of the wind farm the following steps are performed: In a first step, a digital image (IM) is obtained from an operational forecasting system based on high-resolution simulations performed with a numerical weather prediction (NWP) model, the digital image (IM) being provided from the region of the wind turbine. In a second step, a prediction of a class is determined having a highest probability out of a number of pre-defined classes by processing the digital image (IM) by a trained data driven model (MO), where the digital image (IM) is fed as a digital input to the trained data driven model (MO) and the trained data driven model (MO) provides the class with the highest probability as a digital output, wherein the number of classes corresponds to different meteorological conditions.

## Description

The invention relates to a method and an apparatus for computer-implemented forecasting of wind phenomena with impact on a wind turbine.

Wind turbines of wind farms comprise an upper section with a rotor and a nacelle on the top of a tower, where the upper section can be rotated around a vertical yaw axis in order to vary the yaw angle of the respective turbine. The yaw angle of a turbine is usually adjusted such that the rotor of the wind turbine faces the wind. To do so, wind sensors (i.e. anemometers) are installed on the respective wind turbines to estimate the wind direction. On the one hand, a yaw misalignment causes power loss in the production of electric energy in the wind farm and shall be avoided. On the other hand, if the wind is strong or changes to fast, a wrong yaw angle can cause damage to a wind turbine of the wind farm.

In particular, changing wind conditions may be result of local wind phenomenology mainly related to complex terrain, i.e. a complex earth's surface in the surrounding of an onshore wind farm. Among others, two well-known orographic wind phenomena which may have a direct impact on the energy production, the machine lifetime, security and maintenance of a wind turbine, are Downslope Windstorms (DSWS) and Hydraulic Jumps (HJ). Such wind phenomena are not detectable by means of sensors of the wind turbines of the wind farm.

It is therefore an object of the invention to provide an easy method in order to be able to forecast wind phenomena with impact on wind turbines within a wind farm.

This object is solved by the independent patent claims. Preferred embodiments of the invention are defined in the dependent claims.

The invention provides a method for computer-implemented forecasting of wind phenomena with impact on one or more wind turbines of a wind farm. The wind farm comprises at least one wind turbine. In case of a plurality of wind turbines, the number of wind turbines may be arbitrary. Each of the wind turbines comprises an upper section on the top of a tower, the upper section being pivotable around a vertical axis and having a nacelle and a rotor with rotor blades. The rotor is attached to the nacelle and the rotor blades are rotatable by wind around a horizontal rotor axis.

According to the method of the invention, the following steps are performed at each time step of one or more time steps during the operation of the wind farm.

In a first step, a digital image from an operational forecasting system based on high-resolution simulations performed with a numerical weather prediction (NWP) model is obtained. In the following, the term "image" refers to a digital image. The term "obtaining an image" means that the image is received by a processor implementing the method of the invention. The digital image is not an image which is taken by a camera, but is based on a number of high-resolution simulations of an operational forecasting system, based on a NWP model such as the well-known Weather Research and Forecasting (WRF) model. The WRF is a NWP system designed to serve atmospheric research and operational forecasting needs. Numerical weather prediction refers to the simulation and prediction of the atmosphere with a computer model, and WRF is a set of software for this. The obtained digital image is provided from the region of the wind turbine.

The time-interval between two successive time steps may be chosen arbitrarily and is in particular regular. The time-interval may be chosen from minutes to hours. The lesser the chosen time-interval is, the more precise the forecasting of the wind phenomena will be.

In a second step, a prediction of a class having a highest probability out of a number of pre-defined classes by processing the digital image by a trained data-driven model is determined. The digital image is fed as a digital input to the trained data-driven model and the trained data-driven model provides the class with the highest probability as a digital output, wherein the number of classes corresponds to different meteorological conditions. The different meteorological conditions correspond to wind phenomena which may or may not have an impact on one or more wind turbines of the wind farm.

The method of the invention provides an easy and straight forward method for determining/forecasting of wind phenomena with high accuracy which may have an impact, in particular a negative impact, on one or more wind turbines with regard to energy production, machine lifetime, security and maintenance. To do so, a trained data-driven model is used. This model is trained by training data comprising a plurality of images from the operational forecasting system based on a number of NWP high-resolution simulations together with the information about the class of different meteorological condition to which a respective image belongs.

Any known data-driven model being learned by machine learning may be used in the method according to the invention. In a particularly preferred embodiment, the trained data-driven model is a neural network, preferably a Convolutional Neural Network which is particularly suitable for processing image data. Nevertheless, other trained data-driven models may also be implemented in the method of the invention, e.g. models based on decision trees or support vector machines.

In a preferred embodiment of the invention, an information based on the class of a respective meteorological condition with the highest probability is output via a user interface. E.g., the class itself may be output via the user interface. Alternatively or additionally, the specific meteorological condition or wind phenomena may be provided via the user interface. A warning may be provided via the user interface in case that the meteorological condition or wind phenomena corresponds to a condition or phenomena which may have an impact on one or more wind turbines of the wind farm. Thus, a human operator is informed about an upcoming critical condition so that he can initiate appropriate counter measures by, for example, adjusting the yaw angles of the wind turbines or curtailing or stopping the turbines before wind conditions result in extreme loads of components of the turbine. Preferably, the user interface comprises a visual user interface but it may also comprise a user interface of another type (e.g. an acoustic user interface).

In another particularly preferred embodiment, the method of the invention generates control commands for the wind farm (i.e. the number of wind turbines of the wind farm) if the class with the highest probability corresponds to a meteorological condition which is regarded to have an impact on one or more wind turbines of the wind farm. The control commands are such that some or all of the wind turbines may be triggered to change, for example, the yaw angle and so one so that potential danger may be minimized or so that the generated electric power of the wind farm may be enhanced. This embodiment enables an automatic alignment of at least some of the wind turbines, prior to the upcoming wind condition. This reduces either a power loss due to yaw misalignment or reduces the danger of reduced machine lifetime or increased maintenance due to specific wind phenomena and meteorological conditions, respectively.

In another embodiment, the image results from a cross-section of the high-resolution simulation through the site of the wind farm or through a place close to the site of the wind farm. A place close to the wind farm may be, for example, the place of a meteorological station in the vicinity of the wind farm which monitors the weather conditions for usual control operations. The digital image can be, for example, a vertical cut through the wind farm. However, the cross-section can be chosen in a different manner as well.

In particular, the image illustrates wind intensity and behavior in the cross-section of the high-resolution simulations. In particular, the cross-section of the high-resolution simulation lies in a plane extending perpendicular to earth's surface and along a dominant wind direction. As the wind speed (or wind intensity) is the sole information which is necessary to forecast the wind phenomena with impact on one or more wind turbines of the wind farm, the images may be gray-scale images in which the brightness corresponds to the wind speed. However, if other parameters shall to be used to be analyzed as well, the images might contain colors containing information about selected parameters (e.g. temperature or turbulent kinetic energy).

The image is based on a number of high-resolution simulations which are the result of nesting a corresponding number of domains provided by a global WRF model. Each of the domains may use a different model to simulate and predict the atmosphere. Nesting of simulation data is a well-known means to increase the resolution in an area of specific interest, i.e. the area where the wind farm is located. It is also known as "performing a physical downscaling".

Besides the above method, the invention refers to an apparatus for computer-implemented forecasting of wind phenomena with impact on one or more wind turbines of a wind farm. The apparatus is configured to perform the method according to the invention or one or more preferred embodiments of the method according to the invention.

Moreover, the invention refers to a computer program product with a program code, which is stored on a non-transitory machine-readable carrier, for carrying out the method according to the invention or one or more preferred embodiments thereof when the program code is executed on a computer.

Furthermore, the invention refers to a computer program with a program code for carrying out the method according to the invention or one or more preferred embodiments thereof when the program code is executed on a computer.

An embodiment of the invention will now be described in detail with respect to the accompanying drawings.
- Fig. 1: is a schematic illustration of an operational fore-casting system providing high-resolution images used for image recognition under deep learning techniques according to the invention.
- Fig. 2: shows a schematic illustration of a controller for performing an embodiment of the invention.

The method as described in the following provides an easy method to forecast wind phenomena (also referred to as meteorological conditions) which have, in particular a negative, impact on one or more wind turbines of a wind farm. To do so, a number of images IM from an operational forecasting system based on high-resolution simulations is obtained. The operational forecasting system may be, for example, based on the well-known Weather Research and Forecasting (WRF) model. The WRF model is a numerical weather prediction (NWP) system designed to serve both atmospheric research and operational forecasting needs. NWP refers to the simulation and prediction of the atmosphere with a computer model, and WRF is a set of software for this. The model serves as a wide range of meteorological applications across scales ranging from meters to thousands of kilometers. WRF allows to produce simulations reflecting real data, such as observations or analysis. WRF provides operational forecasting.

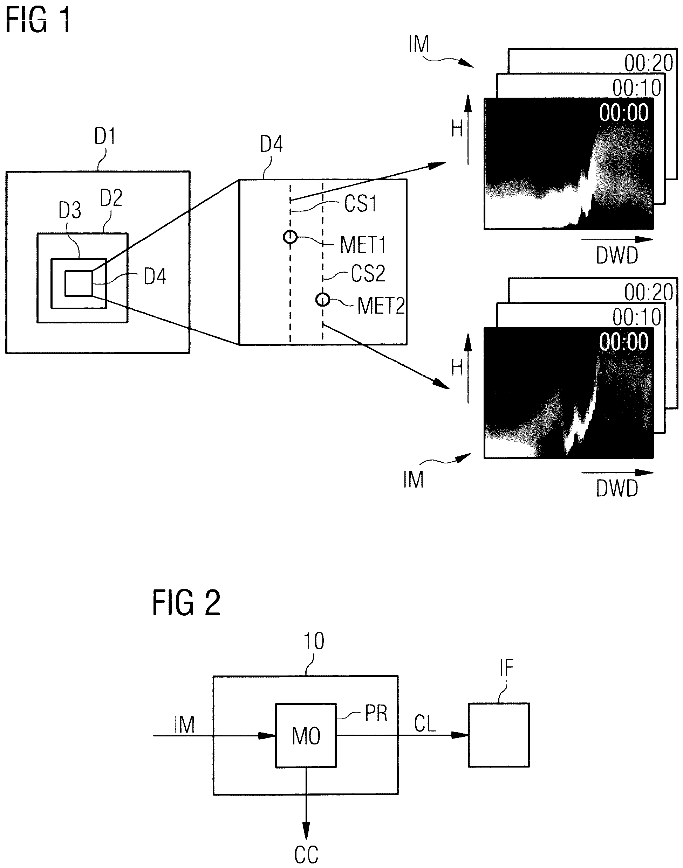

In Fig. 1, D1 denotes a first domain provided by a global model out of the WRF model. D2, D3 and D4 refer to different domains resulting from different simulations enabling step-by-step a better resolution for an area of interest. In the present example of Fig. 1, the area of interest is denoted by D4. The enhancement of resolution of the simulation from domain D1 to D2, D2 to D3 and D3 to D4 is achieved by means of well-known nesting.

In the area of interest denoted by D4, by way of example only, two wind farms denoted by MET1, MET2 are located. The images used for forecasting of wind phenomena result from a cross-section CS1, CS2 of the high-resolution NWP simulation through the site of the wind farm (i.e. MET1, MET2) or through a place close to the site of the wind farm. Such places close to the site of a wind farm might be meteorological stations in the vicinity of the wind farm.

The images resulting from a cross-section CS1, CS2 of the high-resolution simulation in the area of interest (i.e. domain D4) illustrate the wind intensity in the cross-section CS1, CS2 of the high-resolution NWP simulation. As the wind speed is the most relevant parameter, gray-scale images in which the brightness corresponds to the wind speed, are used. In the images IM right to the domain D4, the wind speed is the higher the lighter the gray-scale color is. The cross-section CS1, CS2 of the high-resolution NWP simulation resulting in the image IM used for forecasting the wind phenomena lies in a plane extending perpendicular to the earth's surface (i.e. the height H) and along a dominant wind direction DWD.

Although the cross-sections CS1, CS2 for the wind farms MET1, MET2 are parallel in the present example, this is not necessary. There could be an angle different from 0 degrees between the cross-sections CS1, CS2 as well.

For each site of the wind farm MET1, MET2, a number of images IM, greater than 1, is obtained in a predetermined time interval. In the present example, the time-interval between two images IM is chosen to 10 minutes (starting from 00:00 with the first image, 00:10 with the second image, 00:20 with the third image, and so on). However, it is to be understood that the time interval could be chosen in a different manner.

The respective images IM resulting from the operational forecasting system based on high-resolution NWP simulations are transferred to a controller 10 (Fig. 2) of the wind farm. The controller 10 comprises a processor PR implementing a trained data-driven model MO receiving respective images IM as a digital input and providing a class CL with a highest probability of an upcoming meteorological condition as a digital output.

In the embodiment described herein, the trained data-driven model MO is based on a Convolutional Neural Network (CNN) having been learned beforehand by training data. The training data comprise a plurality of images IM obtained from the operational forecasting system based on high-resolution images of a respective site of a wind farm together with the information of the class of a current wind phenomena or meteorological condition. Convolutional Neural Networks are well-known from the prior art and are particularly suitable for processing digital images. A Convolutional Neural Network usually comprises convolutional layers followed by pooling layers as well as fully connected layers in order to determine at least one class of a respective image or image series where the class according to the invention is one out of a number of different meteorological conditions.

By way of example, three different classes corresponding to a normal weather condition, Downslope Windstorms (DSWS) and Hydraulic Jumps (HJ) may be chosen.

In the embodiment presented herein, the class CL corresponding to a specific meteorological condition or wind phenomena produced as an output of the model MO results, for each image IM, in an output on a user interface UI which is only shown schematically in Fig. 2. Preferably, the user interface UI comprises a display. The user interface provides information for a human operator. The output based on the class CL of the meteorological condition may be the class CL or the meteorological condition itself so that the operator is informed about an upcoming meteorological condition or wind phenomena. Alternatively or additionally, the output may be a warning in case that the class CL corresponds to a meteorological condition or wind phenomena which has an expected negative impact on at least one of the wind turbines of the wind farm.

It is to be understood that for each site of a wind farm, the forecasting of wind phenomena or meteorological conditions is carried out separately or can be carried out separately. If the wind farms are located close together, the forecasting of wind phenomena or meteorological conditions can be done in a combined proceeding, thereby processing images from both sites of wind farms in the model MO.

The class CL determined by the model MO also results in control commands CC which are provided to a controller of at least some of the wind turbines of the wind farm(s) in order to adjust, for example, the yaw angles of the turbines. The control commands CC are such that the wind turbines are, for example, rotated around their respective yaw axis by an angle which is sufficient to avoid critical situations with regard to critical loads or in a way to increase the generated energy production.

The invention as described in the foregoing has several advantages.

The method described above enables an earlier detection of critical weather patterns. Wind turbines of the wind farm can act before the weather patterns harm the turbines. As a result, safety and security of maintenance staff is increased.

The method as described above can also be applied in wind farm siting projects and not only to existing wind farms.

In particular, in wind farm siting projects the method enables avoiding sub-optimal placing of the wind turbines during the siting process as the method can not only be used for operational forecasting but for studying future wind farm locations. Given a region of interest, it can be determined in advance how the wind flow behavior is (for example, one year of daily simulations in conjunction with deep learning) and detect critical locations highly affected by extreme wind phenomena. In this way, dangerous locations can be avoided and help to design a more productive wind farm.

Knowing critical weather phenomena in advance enables reduced downtimes of the wind turbines of existing wind farm. Due to the possibility to reduce critical loads on the wind turbines, an extended lifetime of the wind turbines can be achieved.

## Claims

1. A method for computer-implemented forecasting of wind phenomena with impact on one or more wind turbines of a wind farm, wherein at each time step of one or more time steps during the operation of the wind farm the following steps are performed:
- obtaining a digital image (IM) from an operational forecasting system based on a number of high-resolution simulations performed with a numerical weather prediction (NWP) model, the digital image (IM) being provided from the region of the wind turbine;
- determining a prediction of a class having a highest probability out of a number of pre-defined classes by processing the digital image (IM) by a trained data driven model (MO), where the digital image (IM) is fed as a digital input to the trained data driven model (MO) and the trained data driven model (MO) provides the class with the highest probability as a digital output, wherein the number of classes corresponds to different meteorological conditions.

2. The method according to claim 1, wherein the trained data driven model (MO) is a neural network, preferably a Convolutional Neural Network.

3. The method according to claim 1 or 2, wherein an information based on the class with the highest probability is output via a user interface (UI).

4. The method according to one of the preceding claims, wherein control commands (CO) are generated for the wind farm if the class with the highest probability corresponds to a meteorological condition which is regarded to have a negative impact on one or more wind turbines of the wind farm.

5. The method according to one of the preceding claims, wherein the image (IM) results from a cross-section of the high-resolution simulation through the site of the wind farm or through a place close to the site of the wind farm.

6. The method according to claim 5, wherein the image (IM) illustrates wind intensity in a cross-section of the high-resolution simulations.

7. The method according to claim 5 or 6, wherein the cross-section of the high-resolution simulation lies in a plane extending perpendicular to earth's surface and along a dominant wind direction.

8. The method according to one of the preceding claims, wherein the image is grey-scale image in which the brightness corresponds to a wind speed.

9. An apparatus for computer-implemented forecasting of wind phenomena with impact on one or more wind turbines of a wind farm, wherein the apparatus comprises a processor (PR) configured to perform at each time step of one or more time steps during the operation of the wind farm the following steps:
- obtaining a digital image (IM) from an operational forecasting system based on a number of high-resolution simulations, the digital image (IM) being provided from the region of the wind turbine;
- determining a prediction of a class having a highest probability out of a number of pre-defined classes by processing the digital image (IM) by a trained data driven model (MO), where the digital image (IM) is fed as a digital input to the trained data driven model (MO) and the trained data driven model (MO) provides the class with the highest probability as a digital output, wherein the number of classes corresponds to different meteorological conditions.

10. The apparatus according to claim 9, wherein the apparatus is configured to perform a method according to one of claims 2 to 8.

11. A computer program product with program code, which is stored on a non-transitory machine-readable carrier, for carrying out a method according to one of claims 1 to 8 when the program code is executed on a computer.

12. A computer program with program code for carrying out a method according to one of claims 1 to 8 when the program code is executed on a computer.
